# EUROPEAN PATENT APPLICATION

(11) **EP 0 670 447 A1**
(43) Date of publication of application: **06.09.1995**
(21) Application number: 95200497.6
(22) Date of filing: 28.02.1995
(51) Int. Cl.: F16L 21/04, F16L 21/08

(54) **Pipe coupling**

(30) Priority: 01.03.1994 NL 9400317
(71) Applicant: Georg Fischer WAGA N.V., NL-8160 AG Epe (NL)
(72) Inventor: Nijsen, Andreas Jacobus Louis, NL-7521 AT Enschede (NL)
(74) Representative: Boelsma, Gerben Harm, Ir.

(57) **Abstract**

The invention relates to a pipe coupling, comprising a sleeve (1) with at least one end adapted for the insertion of a pipe (4,5), said end being provided with a substantially frusto-conical supporting surface (3) for a sealing ring (6,7) having a substantially circular cross section, and a pressure ring (8) having an opposite frusto-conical pressing surface (9), by means of which - in association with said supporting surface (3) - the sealing ring (6,7) may be compressed around a pipe (4,5) that is inserted in the sleeve (1), locking means (13,14) cooperating with said pressing surface (9) being provided, so as to be urged, by said pressing surface (9), into engagement with the surface of the pipe (4,5) to be coupled when the pressing ring (8) is tightened. According to the invention the locking means (13,14) comprises a strip of material that is bent into a frusto-conical and split ring, which engages the sealing ring (6,7) on the side turned away from the side that engages the supporting surface (3) while its outer circumferential edge engages the pressing surface (9) of the pressure ring (8) and its inner circumferential or base edge is engaging the pipe (4,5) to be coupled.

## Description

The invention relates to a pipe coupling, comprising a sleeve with at least one end adapted for the insertion of a pipe, said end being provided with a substantially frusto-conical supporting surface for a sealing ring having a substantially circular cross section and a pressure ring having an opposite frusto-conical pressing surface, by means of which - in association with said supporting surface - the sealing ring may be compressed around a pipe that is inserted in the sleeve, locking means cooperating with said pressing surface being provided, so as to be urged, by said pressing surface, into engagement with the surface of the pipe to be coupled when the pressing ring is tightened.

Such a pipe coupling is known from European patent specification 0418961.

It is an advantage of this well-known coupling, that, while using one size of sealing ring, it may be used for pipes of different diameters and is, more particularly, adapted to "bridge" the differences (in outer diameter) which occur with pipes having the same nomimal (= inner) diameter but consisting of different materials.

The locking means which is to secure a slip free and pull tight position of the pipe within the sleeve, is formed, with this well-known coupling, by a plurality of circumferentially spaced pin-like elements which extend obliquely in the inserting direction and are held in local thickenings of the elastomeric material of the sealing ring. A disadvantage of these locking means is to be seen in that, when the pressure ring is tightened to compress the sealing ring, such locking means may easily tilt, due to which the pull tightness becomes unsufficient.

The invention aims at to overcome this drawback.

According to the invention this aim is achieved in that the locking means comprises a strip of material that is bent into a frusto-conical and split ring, which engages the sealing ring on the side turned away from the side that engages the supporting surface while its outer circumferential edge engages the pressing surface of the pressure ring and its inner circumferential or base edge is engaging the pipe to be coupled.

It has been found that, when tightening the pressure ring, such a frusto-conical split ring will contract - together with the sealing ring - to a smaller diameter due to the inwardly directed force applied to it by the pressing surface.

In the untensioned stage the inner diameters of the split locking ring and the sealing ring must, of course, be the same, while the conus angle of the pressure ring has to be selected such that initiating the tightening of the pressure ring will cause the locking ring to simultaneously engage the outer circumferential edge of the locking ring and the outer circumference of the sealing ring, so that both of said rings (sealing ring and locking ring) will contract gradually to a smaller diameter.

In the process of contraction the split locking ring will finally get with its inner circumferential edge in firm engagement with the surface of the pipe to be coupled. The type of this engagement is dependent of the design of the inner circumferential edge of the split locking ring.

In case of a sharp design the inner circumferential edge will "bite" into the surface of the pipe to be coupled, whereas an axially widened circumferential edge will clamp around the pipe to be coupled.

The invention will be hereafter further explained with reference to the drawings showing a number of embodiments of the invention.
Fig. 1 is a longitudinal sectional view of a straight coupling according to the invention, adapted to couple two pipe sections of different diameters;
fig. 2 is an elevational view of a flat circular strip of material, from which a frusto-conical locking ring my be formed;
fig. 3A and 3B each show an end view of a split locking ring according to the invention with overlapping end portions obtained from the circular strip of fig. 2;
fig. 4 is a partially sectional view, illustrating the operation of the locking ring according to the invention in case of a specific design of the "foot" of the locking;
fig. 5 is a cross-sectional view of a profile from which a locking ring according to the invention with a widened foot my be formed;
fig. 6 is a cross-sectional view of a modification of the locking ring of fig. 5;
fig. 7 is a cross-sectional view of still another locking ring and
fig. 8 shows a cross-section through a locking ring having a "loose" foot.

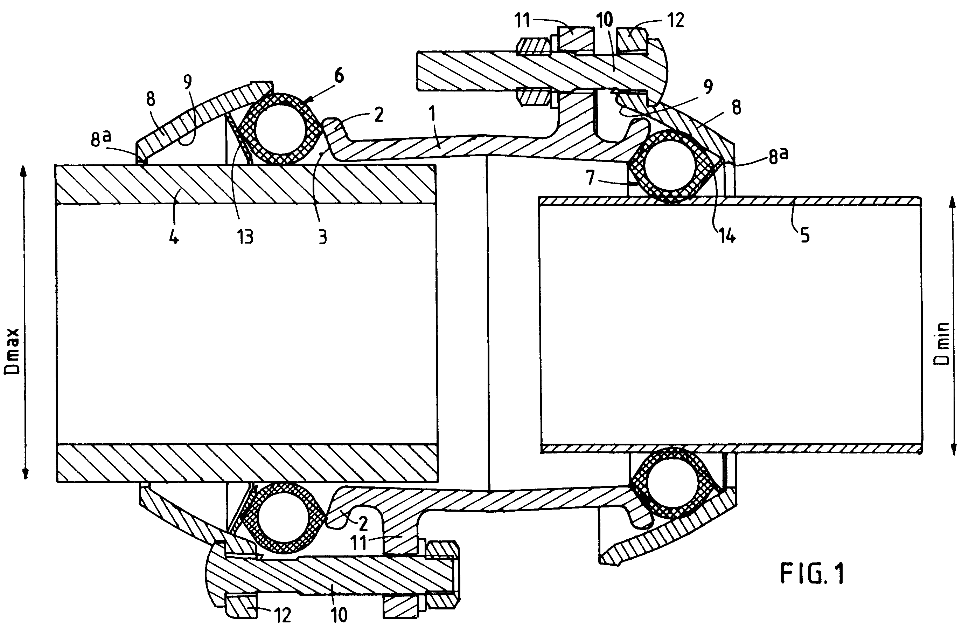

Fig. 1 represents a straight pipe coupling or connecting sleeve 1, by means of which pipes can be coupled, the diameters of which my vary between a value Dₘₐₓ and a value Dₘᵢₙ. At either end of the sleeve 1 there is provided a flange 2 with a conically shaped supporting surface 3 bearing against a sealing 6 (and 7) respectively surrounding the pipes 4 and 5. The sealing rings 6 and 7 are of the type disclosed in European patent specification 0418961, comprising a core that is (readily) compressible in the circumferential direction and substantially undeformble in cross-section, and a sheath of an elastomeric material enclosing said core.

Further details of this sealing ring will not be described.

In the example shown, in which Dₘₐₓ has a value of e.g. 132 mm and Dₘᵢₙ has a value of e.g. 106 mm, the sealing rings 6 and 7 have the same diameter. The angle between the conical supporting 3 and the axis of the coupling is preferably about 70°.

8 designates a pressure ring with a slightly concavely-conical pressing surface 9, by means of which the respective sealing rings 6 and 7 can be pressed against the frusto-conical supporting surfaces by tightening of the screw bolts 10. The latter bolts are inserted through pairs of cooperating lugs 11 and 12 that extend outwardly from the sleeve and from the pressure ring 8 respectively at (e.g. three) circumferentially spaced locations.

As compared with the well-known coupling according to European patent specification 0418961 the functions of the supports and pressing surfaces 3 and 9 have, in fact, been changed. For with the coupling shown it is mainly the conical pressing surface 9 of the pressing ring, that causes the sealing ring 6 (7) to contract circumferentially around the pipe 4 (5).

The pressing surface 9 is slightly concave in shape, i.e. the taper (the angle enclosed with the axis of the coupling) is gradually decreasing as seen radially outwardly (in the example shown from about 35° to about 20°).

In addition to causing the sealing 6 (7) to circumferentially contract, the pressing surface 9 also functions to urge a locking ring 13 (14) - which bears against the sealing ring 6 (7) on the side turned away from the flange 2 - to contract around the pipe 4 (5) to be coupled.

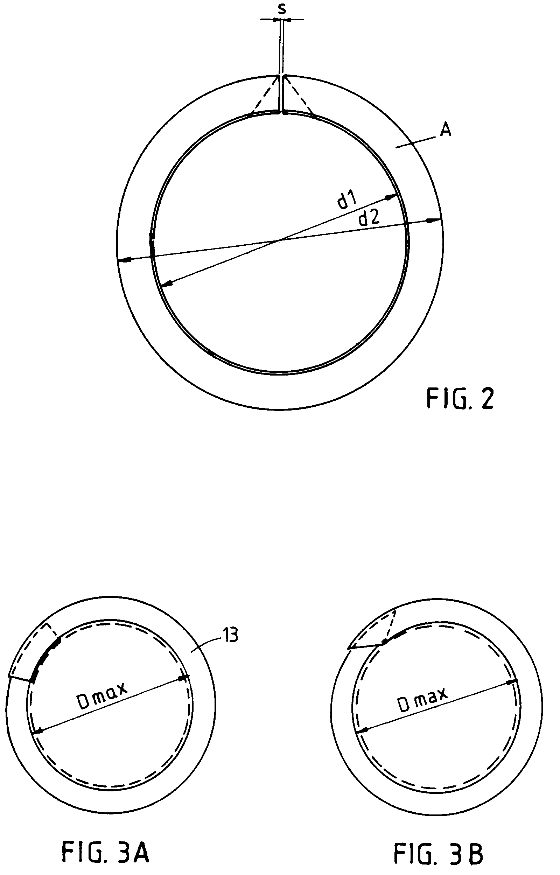

The locking ring 13 (14) is a split, frusto-conical ring which is bent from a strip of elastic material, such as a stainless-steel band. In this respect there are various ways of proceeding. As a possible basis for the frusto-conical locking ring according to the present invention fig. 2 shows a flat circular strip A, the ends of which are spaced by a small slit s. With an inner diameter of 150 mm and an outer diameter of 193 mm the flat ring of fig. 2 may be deformed - by well-known techniques - to a locking ring which is suitable for use with the coupling of fig. 1. In consideration of the above mentioned diameters such locking ring will have an inner diameter that corresponds with the value Dₘₐₓ, and a taper of 60°. The end portion of the locking ring will overlap through an arc of about 30° (vide the end views in fig. 3A and fig. 3B). This stage of the obtained locking ring corresponds with the situation shown at the left in fig. 1, where the sealing ring 6 is loosely bearing around the pipe 4, the locking ring 13 touches the outer surface of the page 4 with its inner circumference and the pressure ring 8 is loosely bearing against the outer circumferential edge of the locking 13 on one hand and against the sheeth surface of the sealing ring on the other hand. After a slight initial displacement to the right of the left hand pressure ring 8, the inner circumferential edge of the contracting locking 13 will start to clamp around the pipe 4, while the sealing ring is simultaneously and sealingly pressed against the supporting surface 3 and sealingly contracts itself around the pipe 4.

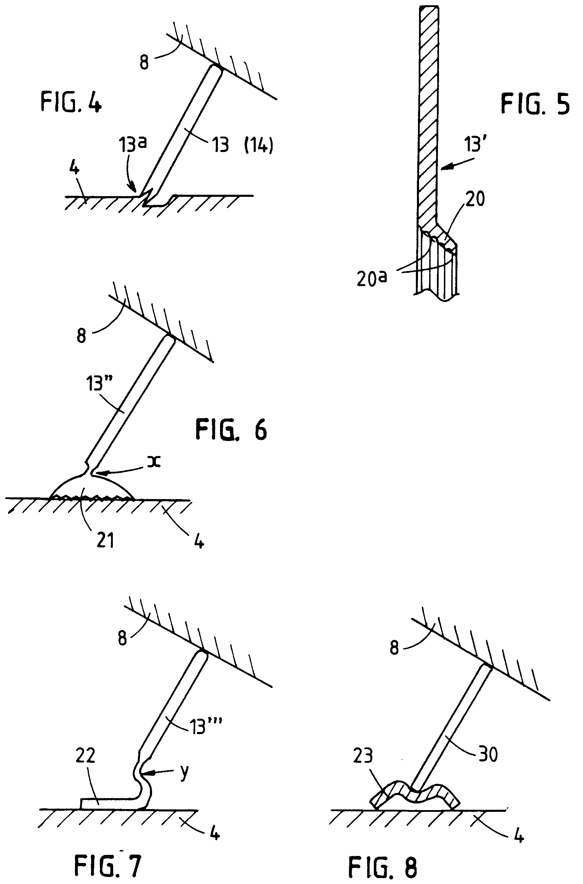

The design of the inner circumferential edge of the locking 13 (14) applied in the example of fig. 1, has been illustrated on an enlarged scale in fig. 4. As shown the inner circumferential edge 13a is cutter-shaped, while the cutting face directed to the left in fig. 4 is slightly recessed to form a receiving and holding space for a chip that is initially cut from the surface of the (e.g. plastics) pipe 4. The holding of the initially cut chip within the recesses space at the cutting face of the locking ring prevents the pipe from further "stripping" under the effect of the pulling forces applied to the coupling and consequently contributes to a pull-tight position of the pipe 4 within the sleeve 1.

In case a tube 5 of a diameter Dₘᵢₙ has to be coupled (as in the case to the right in fig. 1) the sealing ring 7 and the locking ring have to be initially and quite substantially contracted to a smaller diameter before the sealing ring and the locking ring will get bearing on the pipe surface. While initially, contracting the conus angle of the locking ring 14 will gradually decrease, e.g. in the example of fig. 1 from 60° in the untensioned starting position at the left in fig. 1 to 45° in the fully contracted state to the right.

In the position shown to the right in fig. 1 the pressing ring 8 is in its fully tightened position and the outer circumferential edge of the locking ring 14 engages the radially inwardly extending shoulder edge 8a of the pressing ring 8.

As is also shown in fig. 1, the conus angle of the pressing surface 9 of the pressing ring 8 is slightly decreasing radially outwardly from e.g. 35° at the shoulder edge 8a to 20° at the end of the pressing ring facing the sleeve 1. This concavely conical shape of the pressing surface 9 contributes - in association with the decreasing conus angle of the contracting locking ring - to a good balance between the forces that are exerted by the pressing ring 8 to the sealing ring and the locking ring on one hand and the forces that are exerted by the sealing ring and the locking ring to the pipe to be coupled on the other hand. In practice this means, that, when testing the leak tightness and the pull strength, leaking and sliding of the coupled pipes will occur with substantially the same increased test pressure.

At last fig. 5-8 show a number of alternative shapes of the inner circumferential edge of the locking ring 13 (14).

Fig. 5 shows a blank for a truncated conical split locking ring 13', the inner circumferential edge of which is widened to a foot portion 20, the inner circumferential surface of which is ribbed. The radial height of the foot portion 20 decreases from the "web" of the ring 13' towards the "tooth end", which contributes to an axially uniform clamping action of the foot portion 20 around the pipe to be coupled. In the initial position of the locking ring, i.e. when the inner diameter corresponds to Dₘₐₓ, the foot portion 20 shall cover a part of a circle only. A "gap" covering an arc of 90° will in general be enough to prevent the tangential ends of the foot portion from engaging each other when the foot portion is caused to contract to Dₘᵢₙ.

Fig. 6 shows a locking ring 13'', which is also provided with an integrally formed foot 21 at its inner circumference. A reduced cross-section x is provided at the transition between the "web" of the ring 13'' and the foot 21, about which the foot 21 my readily hinge relative to the web when the locking ring 13'' is to be formed from its blank and also when the locking ring 13'' is to be contracted to a smaller diameter.

A modification of the embodiment of fig. 6 is shown in fig. 7. Also in this case there is a reduced cross-section y at the transition between the "web" of the locking ring 13''' and the foot 22.

In fig. 1 there is provided a foot ring 23, which is separated from the locking ring 30. The foot ring 23 may be formed in a practical manner from a strip of "stretch metal". The locking ring 30 engages with its inner circumferential edge in circumferential recesses of the foot ring 23, whereby the inner circumferential edges of the latter will clampingly engage the pipe to be coupled.

As for the foot 20 in fig. 5 it is essential for the feet 21, 22 and 23 in figs. 6-8, that in the initial position only a part (e.g. 270°) of a circle is covered by these feet.

In the above desceription and in the claim the term "sleeve" is to be understood broadly. For example "elbows", T-joints and connecting sleeves of fittings are also intended to be covered thereby.

## Claims

1. A pipe coupling, comprising a sleeve with at least one end adapted for the insertion of a pipe, said end being provided with a substantially frusto-conical supporting surface for a sealing ring, that has a substantially circular cross section and a pressure ring having an opposite frusto-conical pressing surface, by means of which - in association with said supporting surface - the sealing ring my be compressed around a pipe that is inserted in the sleeve, locking means cooperating with said pressing surface being provided, so as to be urged, by said pressing surface, into engagement with the surface of the pipe to be coupled when the pressing ring is tightened, characterized in that the locking means comprises a strip of material that is bent into a frusto-conical and split ring, which engages the sealing ring on the side turned away from the side that engages the supporting surface while its outer circumferential edge engages the pressing surface of the pressure ring and its inner circumferential or base edge is engaging the pipe to be coupled.

2. A pipe coupling according to claim 1, characterized in that the split locking ring extends through an arc of at least 270° when it is in its initial position.

3. A pipe coupling according to claim 1, characterized in that the ends of the split locking ring are overlapping one another.

4. A pipe coupling according to claims 1-3, characterized in that the locking ring is formed of a strip of stainless steel.

5. A pipe coupling according to claims 1-4, characterized in that the conus angle of the locking ring is about 60° in its initial position.

6. A pipe coupling according to claims 1-3, characterized in that the inner circumferential edge of the locking ring is cutter-shaped, as seen in cross-section, while the cutting phase is slightly recessed along a certain distance from the point outwardly.

7. A pipe coupling according to claims 1-6, characrterized in that the inner circumferential edge of the locking ring is cooperating with an axially widened foot that engages around the pipe to be coupled, said foot covering - in the initial position of the locking ring - an arc that corresponds to the inner circumferential length of the locking ring in its maximally contracted state (Dₘᵢₙ).

8. A pipe coupling according to claim 7, characterized in that the widened foot is integrally formed with the web of the locking ring.

9. A pipe coupling according to claims 7-8, characterized in that the web of the locking ring is reduced in cross-section at the transition towards the widened foot.

10. A pipe coupling according to claims 7-9, characterized in that the widened foot has a roughened inner circumferential face.

11. A pipe coupling according to claim 10, characterized in that the foot has a ribbed circumferential face.

12. A pipe coupling according to claims 7-11, characterized in that the radial thickness of the foot decreases from the web towards the tooth end.

13. A pipe coupling according to claim 7, characterized in that the locking ring engages with its inner circumferential edge a circumferential recess of a separate, split clamping ring.

14. A pipe coupling according to clam 13, characterized in that the clamping ring is formed of a strip of stretch metal.

15. A pipe coupling according to any forgoing claim, characterized in that the conus angle of the truncated conical pressing surface of the pressing ring gradually decreases radially outwardly through a number of degrees.

16. A pipe coupling according to clam 15, characterized in that the conus angle decreases from a value of about 35° to about 20°.
